Europäisches Patentamt

(19) European Patent Office                    (11) Publication number:  **0 079 394**
Office européen des brevets                                        **B1**

(12)                          **EUROPEAN PATENT SPECIFICATION**

(45) Date of publication of patent specification: **02.08.89**   (51) Int. Cl.⁴: **G 05 B 19/403**

(21) Application number: **82901541.1**

(22) Date of filing: **25.05.82**

(86) International application number:
**PCT/JP82/00193**

(87) International publication number:
**WO 82/04337 09.12.82 Gazette 82/29**

(54) **NUMERICAL CONTROL DEVICE.**

(30) Priority: **25.05.81 JP 79046/81**

(43) Date of publication of application:
**25.05.83 Bulletin 83/21**

(45) Publication of the grant of the patent:
**02.08.89 Bulletin 89/31**

(84) Designated Contracting States:
**DE FR GB**

(56) References cited:
**WO-A-82/03933**
**DE-A-2 839 736**
**JP-A-55 097 602**

(73) Proprietor: **FANUC LTD**
**3580, Shibokusa Aza-Komanba Oshino-mura**
**Minamitsuru-gun Yamanashi 401-05 (JP)**

(72) Inventor: **FUKUYAMA, Hiroomi**
**719-644, Yano-cho**
**Hachioji-shi Tokyo 192 (JP)**

(74) Representative: **Opperman, Stuart Richard et al**
**Haseltine Lake & Co. Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a numerical control device for executing numerical control processing on the basis of machining program data. More particularly, the invention relates to a numerical control device having a microprocessor exclusively for the creation of a machining program, and a microprocessor exclusively for controlling a machine tool, and which is so adapted as to permit the creation of a machining program and the concurrent control of the machine tool based on a machining program separate from the created machining program.

NC devices include so-called manual NC devices which are simple in construction and make no use whatsoever of a tape reader. In a manual NC device, positioning or cutting data is preset on a number of dials mounted on the panel of the NC device which, subsequently, reads the positioning or cutting data from the dials in successive fashion to execute numerical control processing. Alternatively, numerical data may be entered successively from an MDI (manual data input device) and stored in memory, after which the NC device reads out the numerical data successively to perform numerical control processing. Thus, a manual NC device is characterized in that direct programming is performed at the job site while the programmer observes his machining drawing, the program data is entered by means of the dials or MDI, and the machine tool is made to perform an actual machining operation based on this data.

In such conventional manual NC devices, however, programming is extremely difficult, machining efficiency is poor because of the considerable time required for programming, and input errors are common. Manual NC devices have been proposed which enable easy programming from machining drawings and in a shorter period of time, and with fewer errors. Nevertheless, these proposed manual NC devices are not necessarily sufficiently effective in shortening the time required for programming, even though the time required is less than in the prior art. In addition, control of machining performed by a machine tool cannot be carried out while programming is in progress. A serious disadvantage even with these proposed manual NC devices, therefore, is that machining efficiency is poor.

Accordingly, an object of the present invention is to provide a manual NC device which enables a machine tool to be controlled even while programming is in progress.

DE—A—2 839 736 discloses a multiaxis machine tool controlled by a numerical control system through a cable. A microprocessor within the numerical control system is operable to control the machine tool in real time. A numerical control programmer unit is connected to the numerical control system through another cable. The programmer unit utilises a microprocessor therein to produce part programs for loading into the numerical control system, possibly directly through the interconnecting cable.

According to the present invention there is provided a numerical control arrangement for controlling a machine tool, comprising a first microprocessor operable exclusively for use in creating a machining program for the machine tool and a second microprocessor operable exclusively for controlling the same machine tool in real-time, the second microprocessor being operable to control the machine tool in real-time utilising a machining program created with the first microprocessor, characterised in that the first microprocessor is operable to create a first machining program, in dependence upon manually-input information, for use by the second microprocessor to control the machine tool, whilst simultaneously the second microprocessor is controlling the machine tool in real-time utilising a second machining program, and in that the first and second microprocessors are provided in a housing having manually-operable input and output means of the first microprocessor adjacent to manually-operable input and output means of the second microprocessor, whereby an operator can create the first machining program by means of the first microprocessor and its input and output means, whilst simultaneously monitoring real-time control of the machine tool by the second machining program utilising the input and output means of the second microprocessor.

An embodiment of the present invention may provide, within a manual NC device, separate hardware including a microprocessor exclusively for creating a machining program, and hardware, including a microprocessor, exclusively for controlling machining, which items of hardware are operable independently of each other. When necessary, the created machining program may be transferred from a storage area on the program creating side to a storage area on the machine tool control side. With such an arrangement, creation of the machining program and prescribed machining control may be performed simultaneously. According to the present invention as described, the creation of a program and the control of machining based on a separate, already created program can be executed in parallel. In addition, during the control of machining, it is possible to create the machining program that will be required next. It is therefore unnecessary to wait for the creation of the program, enabling machining efficiency to be vastly improved.

Brief description of the drawings

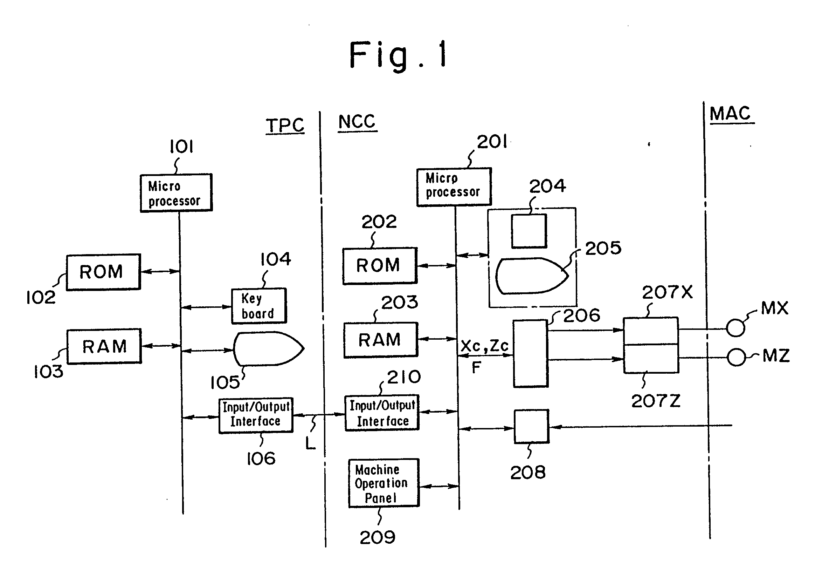

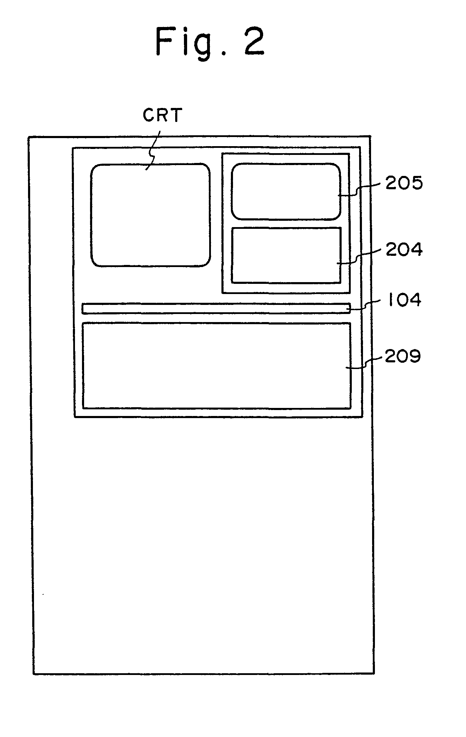

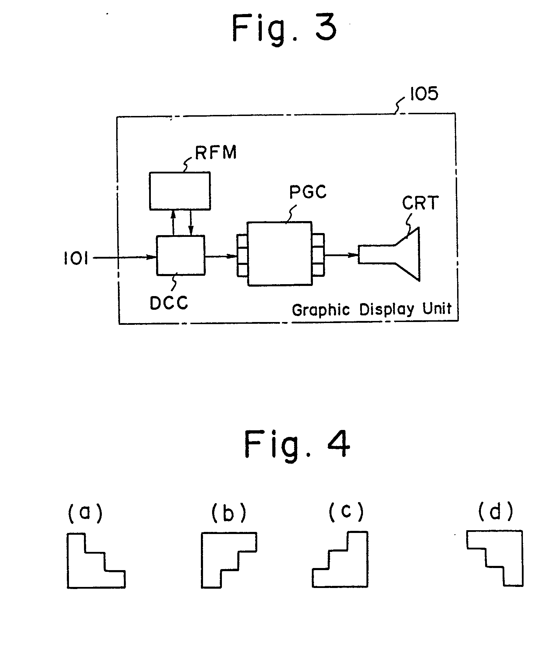

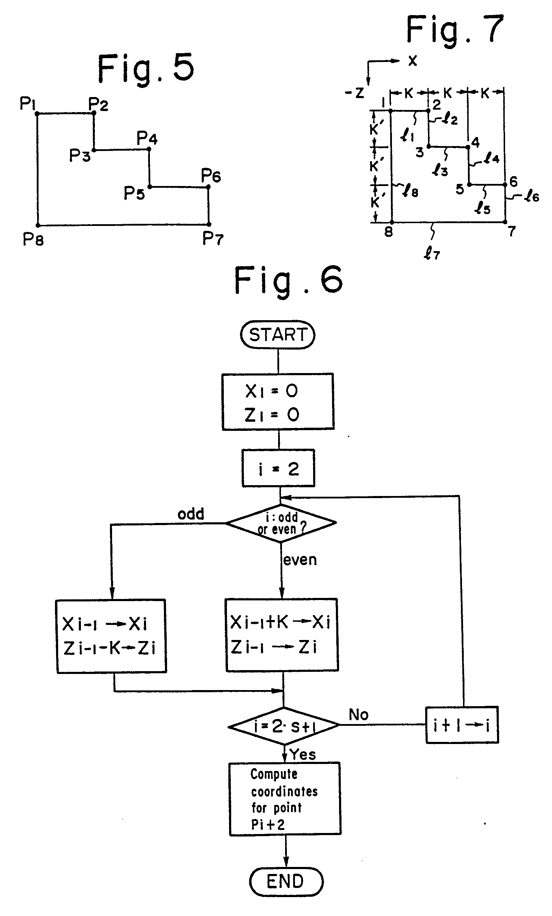

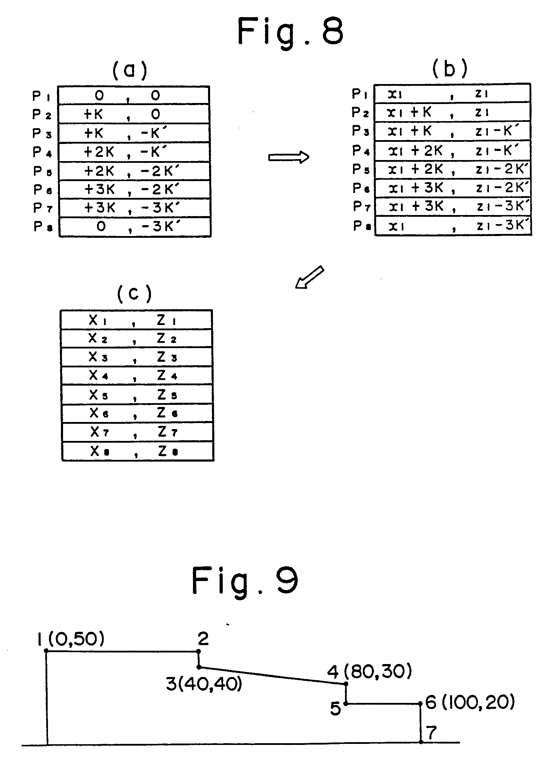

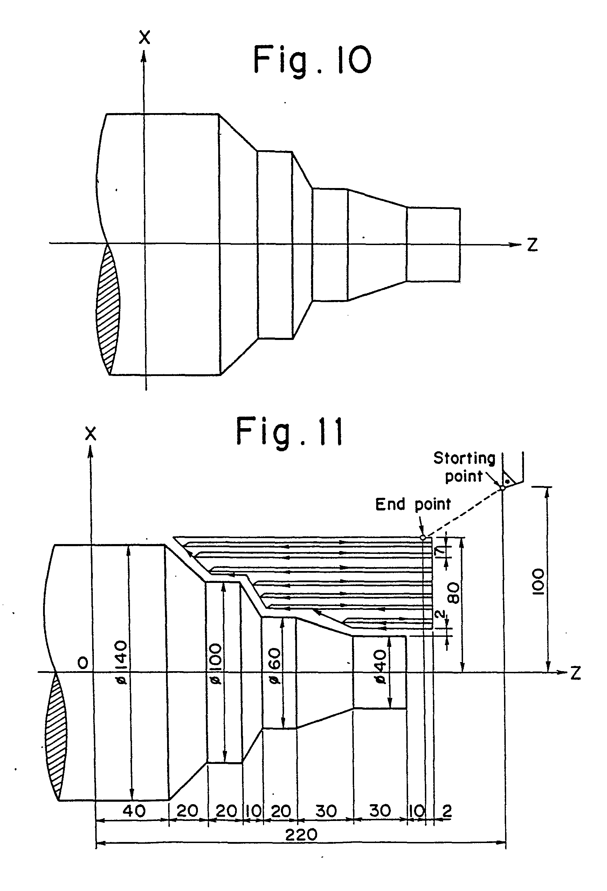

Fig. 1 is a block diagram embodying the present invention; Fig. 2 is a view showing the front of a manual NC device according to the present invention; Fig. 3 is a block diagram illustrating a graphic display device; Figs. 4 and 5 are views of various contour patterns; Fig. 6 is a flowchart of display data editing processing; Fig. 7 is a view showing a contour pattern displayed on a CRT; Fig. 8 is an explanatory view for describing the content of a memory; Fig. 9 is a view showing a final contour displayed on the CRT; and Figs. 10 and 11 are explanatory views useful in describing processing for creation of a machining program.

Fig. 1 is a block diagram of a manual NC device according to the present invention, and Fig. 2 is a front view of the manual NC device. In the Figures, TPC represents a machining program creation side, NCC a machining control side, and MAC a machine tool. The machining program creation side includes a microprocessor 101 which executes processing for, e.g., the creation of the machining program, a read-only memory (ROM) 102 which stores a control program for creating an NC tape and for editing display data, a rewritable memory (RAM) 103 for storing the created machining program, a keyboard (or MDI) 104 for entering data, a graphic display unit 105 for displaying a contour pattern based on the data entered by the keyboard, or for displaying a tool path based on the created machining program, and an input/output interface 106 for administering the exchange of data with the machining control side NCC. The keyboard 104 is provided with a variety of keys. For example, these include pattern input keys for entering desired contour patterns (patterns whose shapes have been defined but whose dimensions have not), step number keys for entering the number of steps possessed by a step-like contour pattern, alpha-numeric keys for entering dimensions or present position and pattern modification information, a transmit key for transmitting the input data to the microprocessor (referred to simply as a processor) 101, and a test key for displaying the machining path of a tool on the display unit 105, based on the created machining program. The keyboard 104 additionally incorporates a buffer register for storing the data entered by the keying operation, the data being delivered to the processor 101 by depressing the transmit key. As shown in Fig. 3, the graphic display unit 105 includes a display control circuit DCC, a cathode ray tube CRT, a refresh memory RFM for storing display data sent by the processor 101, and a pattern generating circuit for generating graphics and characters on the basis of the display data read out of the refresh memory RFM continuously via the display control circuit DCC.

The machining control side NCC includes a microprocessor (referred to as a processor) 201 for controlling machining on the basis of the machining program and control program, a read-only memory (ROM) 202 for storing the control program, a rewritable memory (RAM) 203 for storing the machining program delivered by the machining program creation side TPC, a manual data input (MDI) unit 204 for entering one block of numerical control data and for entering program correction data, a display unit 205, a pulse distributor 206 for executing well-known pulse distribution computations upon receiving position commands Xc, Zc and a feed rate F applied thereto as input signals, X- and Z-axis servo control circuits 207X, 207Z for driving and controlling motors Mx, Mz, a power sequence circuit 208 which, when M, S and T function instructions are read from the machining program, is adapted to send these as commands to the machine MAC, and which delivers, e.g., relay contact signals and limit signals from the machine MAC to the processor 201, a machine operating panel 209, and an input/output interface 210. It should be noted that the machining control side NCC has substantially the same construction as that of an ordinary computerized NC device.

The operation of the present invention will be described next.

[A] Described first will be processing for creating a machining program, in which we will assume that the program is for a turning operation performed by a lathe.

First, assuming that the contour patterns which can be entered by the keyboard 104 are as shown by (a) through (d) in Fig. 4, four input pattern keys will be arrayed on the keyboard 104, each key corresponding to one of these patterns. It should be noted that an arrangement can be adopted wherein patterns are selected by operating numeric keys. In entering the numerical data for the machining contour illustrated in Fig. 5, therefore, the first step is to depress the pattern input key corresponding to the contour pattern, then enter the step number "3" and depress the transmit key. This feeds the contour pattern information and step number information into the processor 101.

Upon receiving this the input contour pattern and step number information, the processor 101 executes processing for the purpose of editing display data, in accordance with the flowchart shown in Fig. 6.

Specifically, letting P1, P2... designate the corners (points) on the contour pattern shown in Fig. 5, the coordinate values for each point Pi (i=1, 2...) are defined, display data is edited on the basis of these coordinate values, and the edited display data is delivered to the graphic display unit 105. The following is a description of the editing processing.

First, the starting point (point P1) is taken as the origin, the length of the line between two points on the X axis is taken as K, and the length of a line between two points on the Z axis is taken as K'. Thus, let $X_1 = Z_1 = 0$, let $\overline{P_1 P_2} = \overline{P_3 P_4} = \overline{P_5 P_6} = K$, and let $\overline{P_2 P_3} = \overline{P_4 P_5} = \overline{P_6 P_7} = K'$. Next, the coordinates $(X_i, Z_i)$ of points Pi (i=1, 2...) are found. For point P2, by way of example, the following operations are performed:

$$X_1 + K \longrightarrow X_2, \quad Z_1 \longrightarrow Z_2$$

to obtain $(X_2, Z_2)$. Thereafter a decision is made as to whether $i$ is equal to $(2S+1)$ (where S is the number of steps, with S=3 in the example of Fig. 5). If they are unequal, then the operation $i+1 \longrightarrow i$ is performed, and the coordinates $(X_3, Z_3)$ of point P3 are found by performing the operations:

$$X_2 \longrightarrow X_3, \quad Z_1 - K' \longrightarrow Z_3$$

These arithmetic operations are repeated in like fashion until $i=2S+1$ $(=7)$ is established. When $i=7$ holds, the coordinates $(X8, Z8)$ of point $P8$ are found from:

$$X1\longrightarrow X8, \quad -SK'\longrightarrow Z8$$

The foregoing completes the processing for defining the coordinate values of each of the points Pi. It should be noted that $K$, $K'$ are predetermined.

Next, the processor 101 utilizes these coordinate values to edit the display data. The display data is composed of the following, which serves as an example:

"Point (0,0) (blank)"—data for positioning beam at origin
"Vector (K,0) (solid line)"—display data for line segment $1_1$
"Vector (0,K') (solid line)"—display data for line segment $1_2$
"Vector (K,0) (solid line)"—display data for line segment $1_3$

.
.
.
.
.
.

"Vector (0,3K') (solid line)"—display data for line segment $1_8$

After this editing operation, the display data is sent to the graphic display unit 105. In other words, the display data is stored in the refresh memory RFM via the display control unit DCC (Fig. 3). The display control unit DCC then continuously and repeatedly reads the display data out of the refresh memory RFM and feeds it into the pattern generator PGC. The latter generates a pattern based on the display data and causes it to be displayed on the cathode-ray tube CRT. Fig. 7 shows the contour pattern displayed on the CRT owing to the foregoing processing.

When the desired contour pattern appears on the CRT, the operator then enters the actual positional coordinates of each of the points Pi or the actual dimensions of the contour while the observes both the displayed graphic and his machining drawings. It should be noted that each corner of the contour pattern displayed on the CRT is accompanied by a number (or, say, a letter of the alphabet) 1, 2,..., 7, 8 for specifying the corresponding corner.

When the above processing for editing the display data is completed, the provisional coordinate values are planted in the memory 108, in the manner shown in Fig. 8(a). If the alpha-numeric keys on the keyboard 104 are operated under these conditions to enter the following:

$$1 \quad x_1, z_1$$

then the coordinates of each corner will be recomputed, and the content of memory 103 will be converted to the form shown in Fig. 8(b). Thenceforth, if the operator likewise enters the positional coordinates of the prescribed corners, then the coordinates of all the corners may be found, and the content of the data memory will have the form shown in Fig. 8(c). For example, if the operator actually enters the coordinates:

$$
\begin{aligned}
&1 \quad 0., \ 50. \\
&3 \quad 40., \ 40. \\
&4 \quad 80., \ 30. \\
&6 \quad 100., \ 20.
\end{aligned}
$$

for the four positions occupied by the corners 1, 3, 4 and 6, the final contour will be defined as shown in Fig. 9. It is noteworthy that the final contour can be defined even without necessarily entering the positional coordinates of corners 2, 5. In other words, minimal numerical data, such as positional coordinates and dimensions, need be entered to define graphics, and the input sequence can be a random one.

The microprocessor 101 edits the display data in the above manner each time one item of numerical data is entered, and causes the display data to be delivered to the graphic display unit 105 for display on the CRT. Thus the graphic which appears on the CRT of the graphic display unit 105 successively changes in shape on the basis of each item of numerical data that is entered. The displayed graphic is the optimum one in the sense that the contour does not extend beyond the edges of the CRT display, without at the same time appearing too small.

Since the graphic displayed on the basis of the numerical data changes immediately after each item of numerical data is entered, the operator can determine visually whether each data item is correct. Further, the displayed graphic is gradually modified into the final contour, enabling the operator to visually confirm the transition to the final contour. This enables the creation of sophisticated numerical control information with little possibility of error.

Thus, the numerical data such as the positional coordinates or dimensions specifying the final contour is entered through the foregoing operation. This is followed by entering, e.g., the starting and end points of the tool, the distance $_\Delta u$ for the finishing allowance along the direction of the X axis, the distance $_\Delta w$ for the finishing allowance along the direction of the Z-axis, feed speed (F00), spindle rotational frequency (S00),

4

and cut width $_\Delta$d. The entry of these items of data completes the input operation of all numerical control data for turning work performed by the lathe.

When entry of all numerical control data is completed, the processor 101, under the control of the control program for creating a machining program, utilizes these items of numerical control data to create the machining program. For example, the processor 101 will create the following machining program when the final contour is as shown in Fig. 10, where $_\Delta$u=4.0, $_\Delta$w=2.0, and $_\Delta$d=7.0, and where feed speed and spindle rotational frequency for an outer diameter rough cutting cycle are F30, S55, and feed speed and spindle rotational frequency for a finishing cycle are F15, S58:

```
NO10 G50X200.0 Z220.0; starting point coordinate setting
NO11 G00X160.0 Z1800.0;
NO12 G71 P013 Q019 U4.0 W2.0 D7.000 F30 S55;
NO13 G00X80.0 F15 S58;
NO14 G01W—40.0;
NO15 X120.0 W—30.0;
NO16 W—20.0;
NO17 X2000.0 W—10.0;
NO18 W—20.0;
NO19 X280.0 W—20.0;
NO20 G7.0 P013 Q019
```

It should be noted that the above program is constituted by diameter specifications. In the machining program, Ni (i=010 to 020) denotes the sequence number, G50 denotes a G-function instruction for setting the coordinate system, G00, G01, G71 and G70 denote M-function instructions for positioning, linear interpolation, outer diameter rough cutting cycle and finishing cycle, respectively, X and Z designate absolute commands, and U, W incremental commands. Further, block NO10 signifies the coordinate values of the tool starting point, and block NO11 the coordinate values of the end point thereof. Block NO12 indicates an instruction for rough cutting, at a cutting width 7.0, the contour specified by the blocks at sequence numbers NO13 to NO19. Blocks NO13 to NO19 indicate the final machining shape, and block NO20 an instruction for the finishing machining of the shaped specified by blocks NO13 to NO19.

When the above-described machining program has been created in accordance with the foregoing sequence, a program number is attached to the machining program and the program is stored in memory 103 to end the processing for creation of the machining program. When the test key on the keyboard is depressed, the machining program data will be read successively, causing the tool path, shown in Fig. 11, to be displayed on the CRT of the graphic display unit 105.

[B] Processing for transfer of machining program

When the machining program has been created according to the sequence described in [A], the processor 101 begins the processing for the transfer of the machining program in response to a transfer request, or by sensing that the machining control side NCC is not in the process of controlling machining. Specifically, the machining program data is fed successively into the buffer register, not shown, of the input/output interface 106. As a result, an input/output control unit (not shown), located within the input/output interface 106, transfers the machining program data, in the form of a bit serial or in parallel, to a buffer register (not shown) in the input/output interface 210 through a transmission line L. The processor 201 on the machining control side NCC, meanwhile, reads the transferred machining program data and loads it in memory 203. Thenceforth the processors 101, 201 continue to store the machining program data successively in the memory 203, through the memory 103, input/output interface 106, transmission line L and input/output interface 210, just as described above, until the machining program is stored in its entirety in the memory 203, thereby ending processing for data transfer to the memory 203.

[C] Processing for machining control

When the machining program has been stored in memory 203, the machining control side NCC is placed in a mode which enables ordinary numerical control processing (machining control) to be performed. When a cycle start button on the operation panel 209 is depressed, the processor 201 reads the machining program data successively from the memory 203 and, under the control of the control program, executes the outer diameter rough cutting and finishing cycles.

[D] Processing for concurrent machining program creation and machining control

In the present invention, as will be apparent from the arrangement shown in Fig. 1, there are provided separate items of hardware, namely the hardware (the machining program creation side TPC) exclusively for creating the machining program and the hardware (machining control side NCC) exclusively for controlling machining, which items of hardware are capable of executing predetermined processing independently of each other. Therefore, whenever necessary, a created machining program may be transferred from the memory on the machining program creation side TPC to the memory on the machining control side NCC, machining control may be performed based on said machining program and, in concurrence therewith, processing for creating a machining program may be executed on the machining program creation side TPC.

## EP 0 079 394 B1

It should be noted that the present invention is not limited to the embodiment thereof but can be modified in various ways within the scope of the claims. For example, the keyboard 104 and MDI 204 can be shared. Also, an arrangement can be adopted wherein two or more machining programs are stored in the memories 103, 203. When such is the case, it will be necessary to attach a program identification code to each machining program and either produce signals indicative of the identification code and of a transfer request or apply the identification code as an input for selecting the desired machining program, and then perform machining based on the machining program.

According to the present invention as described hereinabove, the creation of a program and the control of machining based on a separate, already created program can be executed in parallel. In addition, during the control of machining, it is possible to create the machining program that will be required next. It is therefore unnecessary to wait for the creation of the desired machining program, enabling machining efficiency to be vastly improved. The present invention therefore is suitable for application in the field of numerical control.

## Claims

1. A numerical control arrangement for controlling a machine tool (MAC), comprising a first microprocessor (101) operable exclusively for use in creating a machining program for the machine tool (MAC) and a second microprocessor (201) operable exclusively for controlling the same machine tool (MAC) in realtime, the second microprocessor (201) being operable to control the machine tool (MAC) in real-time utilising a machining program created with the first microprocessor (101), characterised in that the first microprocessor (101) is operable to create a first machining program, in dependence upon manually-input information, for use by the second microprocessor (201) to control the machine tool (MAC), whilst simultaneously the second microprocessor (201) is controlling the machine tool (MAC) in real-time utilising a second machining program, and in that the first and second microprocessors (101, 201) are provided in a housing having manually-operable input and output means (104, CRT) of the first microprocessor (101) adjacent to manually-operable input and output means (204, 205, 209) of the second microprocessor (201), whereby an operator can create the first machining program by means of the first microprocessor (101) and its input and output means (104, CRT), whilst simultaneously monitoring real-time control of the machine tool (MAC) by the second machining program utilising the input and output means (204, 205, 209) of the second microprocessor (201).

2. A numerical control arrangement according to claim 1, characterised in that input/output interface circuits (106, 210) are provided in association with respective ones of the first and second microprocessors (101, 201), these interface circuits (106, 210) being interconnected by a signal transmission line (L).

3. A numerical control arrangement according to claim 1 or 2, characterised in that the first and second microprocessors (101, 201) are associated with respective memories (103, 203) each capable of storing one or more machining programs.

4. A numerical control arrangement according to any preceding claim, wherein the manually-operable input and output means of the first microprocessor (101) comprise a keyboard (104) and a cathode ray tube (CRT) of a graphic display unit (105).

5. A numerical control arrangement according to claim 4, wherein the keyboard (104) comprises pattern input keys for entering desired contour patterns to be machined.

6. A numerical control arrangement according to claim 4 or 5, wherein the keyboard (104) comprises step number keys for entering the number of steps possessed by a step-like contour pattern to be machined.

7. A numerical control arrangement according to claim 4, 5 or 6, wherein the keyboard (104) comprises a test key for displaying the machining path of a tool on the cathode ray tube (CRT), based on a created machining program.

8. A numerical control arrangement according to any preceding claim, wherein the manually-operable input and output means of the second microprocessor (201) comprise a manual data input unit (204), a display unit (205) and a machine operating panel (209).

## Patentansprüche

1. Numerische Steueranordnung zum Steuern einer Werkzeugmaschine (MAC), mit einem ersten Mikroprozessor (101), der ausschließlich zur Benutzung beim Erstellen eines Bearbeitungsprogramms für die Werkzeugmaschine (MAC) betreibbar ist, und einem zweiten Mikroprozessor (201), der ausschließlich zum Steuern dieser Werkzeugmaschine (MAC) in Echtzeit betreibbar ist, wobei der zweite Mikroprozessor (201) betreibbar ist, um die Werkzeugmaschine (MAC) in Echtzeit unter Benutzung eines Bearbeitungsprogramms zu steuern, das mittels des ersten Mikroprozessors (101) erstellt ist, dadurch gekennzeichnet, daß der erste Mikroprozessor (101) betreibbar ist, um ein erstes Bearbeitungsprogramm zu erstellen in Abhängigkeit von manuell eingegebener Information, zur Benutzung durch den zweiten Mikroprozessor (201), um die Werkzeugmaschine (MAC) zu steuern, während gleichzeitig der zweite Mikroprozessor (201) die Werkzeugmaschine (MAC) in Echtzeit unter Benutzung eines zweiten Bearbeitungsprogramms steuert, und daß der erste und der zweite Mikroprozessor (101, 201) in einem

6

Gehäuse vorgesehen sind, das manuell betätigbare Eingabe- und Ausgabemittel (104, CRT) des ersten Mikroprozessors (101) benachbart manuell betätigbaren Eingabe- und Ausgabemitteln (204, 205, 209) des zweiten Mikroprozessors (201) aufweist, wodurch ein Operator das erste Bearbeitungsprogramm mittels des ersten Mikroprozessors (101) und seiner Eingabe- und Ausgabemittel (104, CRT) erstellen kann, während er gleichzeitig die Echtzeitsteuerung der Werkzeugmaschine (MAC) durch das zweite Bearbeitungsprogramm unter Benutzung der Eingabe- und Ausgabemittel (204, 205, 209) des zweiten Mikroprozessors (201) überwacht.

2. Numerische Steueranordnung nach Anspruch 1, dadurch gekennzeichnet, daß Eingabe/Ausgabe-Schnittstellenschaltungen (106, 210) in Zuordnung mit dem betreffenden ersten und zweiten Mikroprozessor (101, 201) vorgesehen sind, wobei diese Schnittstellenschaltungen (206, 210) durch eine Signalübertragungsleitung (L) miteinander verbunden sind.

3. Numerische Steueranordnung nach Anspruch 1 oder 2, dadurch gekennzeichnet, daß dem ersten und dem zweiten Mikroprozessor (101, 201) betreffende Speicher (103, 203) zugeordnet sind, wovon jeder in der Lage ist, ein oder mehrere Bearbeitungsprogramme zu speichern.

4. Numerische Steueranordnung nach einem der vorhergehenden Ansprüche, bei der die manuell betätigbaren Eingabe- und Ausgabemittel des ersten Mikroprozessors (101) eine Tastatur (104) und eine Katodenstrahlröhre (CRT) einer Graphikanzeigeeinheit (105) umfassen.

5. Numerische Steueranordnung nach Anspruch 4, bei der die Tastatur (104) Mustereingabetasten zum Eingeben gewünschter Konturmuster, die auszuarbeiten sind, umfaßt.

6. Numerische Steueranordnung nach Anspruch 4 oder 5, bei der die Tastatur (104) Schrittanzahl-Tasten zum Eingeben der Anzahl von Schritten, die für ein stufenartiges Konturmuster, das auszuarbeiten ist, erforderlich sind.

7. Numerische Steueranordnung nach Anspruch 4, 5 oder 6, bei der die Tastatur (104) eine Prüftaste zum Anzeigen des Bearbeitungspfades eines Werkzeugs, der auf einem erstellten Bearbeitungsprogramm beruht, auf dem Bildschirm der Katodenstrahlröhre (CRT) umfaßt.

8. Numerische Steueranordnung nach einem der vorhergehenden Ansprüche, bei der die manuell betätigbaren Eingabe- und Ausgabemittel des zweiten Mikroprozessors (201) eine Manuelldaten-Eingabeeinheit (204), eine Anzeigeeinheit (205) und ein Bearbeitungsbetriebsschaltfeld (209) umfassen.

## Revendications

1. Une disposition de commande numérique pour commander une machine outil (MAC), comprenant un premier microprocesseur (101) actionnable exclusivement pour servir à la création d'un programme d'usinage pour la machine outil (MAC) et un deuxième microprocesseur (201) actionnable exclusivement pour commander la même machine outil (MAC) en temps réel, le deuxième microprocesseur (201) étant actionnables pour commander la machine outil (MAC) en temps réel en utilisant un programme d'usinage créé avec le premier microprocesseur (101), caractérisée en ce que le premier microprocesseur (101) est actionnable pour créer un premier programme d'usinage, en fonction d'informations entrées manuellement, destiné à être utilisé par le deuxième microprocesseur (201) pour commander la machine outil (MAC), tandis que, simultanément, le deuxième microprocesseur (201) effectue la commande de la machine outil (MAC) en temps réel en utilisant un deuxième programme d'usinage, et en ce que les premier et deuxième microprocesseurs (101, 201) sont prévus dans un logement comportant des moyens d'entrée et de sortie actionnables manuellement (104, TRC) du premier microprocesseur (101) adjacent à des moyens d'entrée et de sortie actionnables manuellement (204, 205, 209) du deuxième microprocesseur (201), de sorte qu'un opérateur peut créer le premier programme d'usinage au moyen du premier microprocesseur (101) et de ses moyens d'entrée et de sortie (104, TRC), tout en surveillant simultanément la commande en temps réel de la machine outil (MAC) par le deuxième programme d'usinage utilisant les moyens d'entrées et de sorties (204, 205, 209) du deuxième microprocesseur (201).

2. Une disposition de commande numérique selon la revendication 1, caractérisée en ce que des circuits d'interface d'entrée/sortie (106, 210) sont prévus en association avec les premier et deuxième microprocesseurs respectifs (101, 201), ces circuits d'interface (106, 210) étant interconnectés par une ligne de transmission de signaux (L).

3. Une disposition de commande numérique selon la revendication 1 ou 2, caractérisée en ce que les premier et deuxième microprocesseurs (101, 201) sont associés avec des mémoires respectives (103, 203), chacune étant propre à mémoriser un ou plusieurs programmes d'usinage.

4. Une disposition de commande numérique selon l'une quelconque des revendications précédentes, dans laquelle les moyens d'entrée et de sortie action manuellement du premier microprocesseur (101) comprennent un clavier (104) et un tube à rayon cathodique (TRC) d'une unité de visualisation graphique (105).

5. Une disposition de commande numérique selon la revendication 4, dans laquelle le clavier (104) comprend des touches d'entrée de modèle servant à entrer des modèles de profil désirés devant être usinés.

6. Une disposition de commande numérique selon la revendication 4 ou 5, dans laquelle le clavier 104 comprend des touches de nombre de pas servant à entrer le nombre de pas présentées par un modèle pas à pas de profil devant être usiné.

7. Une disposition de commande numérique selon la revendication 4, 5 ou 6, dans laquelle le clavier (104) comprend une touche de test servant à visualiser le trajet d'usinage d'un outil sur le tube à rayon cathodique (TRC), sur la base d'un programme d'usinage créé.

8. Une disposition de commande numérique selon l'une quelconque des revendication précédentes, dans laquelle les moyens d'entrée et de sortie actionnables manuellement du second microprocesseur (201) comprennent une unité d'entrée de données manuelle (204), une unité de visualisation (205) et un pupitre opérateur de machine (209).

# Fig.1

EP 0 079 394 B1

# Fig. 2

CRT

205

204

104

209

# Fig. 3

# Fig. 4

(a)  (b)  (c)  (d)

# Fig. 7

# Fig. 5

# Fig. 6

```
        ┌─────────┐
        │  START  │
        └─────────┘
             │
        ┌─────────┐
        │ X₁ = O  │
        │ Z₁ = O  │
        └─────────┘
             │
          ┌──────┐
          │ i = 2│
          └──────┘
             │
      odd  ╱─────────╲
     ┌────╱ i : odd   ╲
     │    ╲ or even ?  ╱
     │     ╲─────────╱
     │          │ even
     │          │
┌──────────┐ ┌──────────┐
│Xi-₁ → Xi │ │Xi-₁+K → Xi│
│Zi-₁-K→ Zi│ │Zi-₁ → Zi │
└──────────┘ └──────────┘
     │          │
     └────────→ │
              ╱─────╲    No    ┌────────┐
             ╱ i=2·s+l ╲──────│ i+l → i│
             ╲─────────╱       └────────┘
                 │ Yes
           ┌──────────┐
           │ Compute  │
           │coordinates│
           │for point │
           │  Pi+2    │
           └──────────┘
                │
           ┌─────────┐
           │   END   │
           └─────────┘
```

# Fig. 8

### (a)

| | | |
|---|---|---|
| $P_1$ | 0 | 0 |
| $P_2$ | +K | 0 |
| $P_3$ | +K | $-K'$ |
| $P_4$ | +2K | $-K'$ |
| $P_5$ | +2K | $-2K'$ |
| $P_6$ | +3K | $-2K'$ |
| $P_7$ | +3K | $-3K'$ |
| $P_8$ | 0 | $-3K'$ |

$\Rightarrow$

### (b)

| | | |
|---|---|---|
| $P_1$ | $x_1$ | $z_1$ |
| $P_2$ | $x_1 + K$ | $z_1$ |
| $P_3$ | $x_1 + K$ | $z_1 - K'$ |
| $P_4$ | $x_1 + 2K$ | $z_1 - K'$ |
| $P_5$ | $x_1 + 2K$ | $z_1 - 2K'$ |
| $P_6$ | $x_1 + 3K$ | $z_1 - 2K'$ |
| $P_7$ | $x_1 + 3K$ | $z_1 - 3K'$ |
| $P_8$ | $x_1$ | $z_1 - 3K'$ |

### (c)

| | |
|---|---|
| $X_1$ | $Z_1$ |
| $X_2$ | $Z_2$ |
| $X_3$ | $Z_3$ |
| $X_4$ | $Z_4$ |
| $X_5$ | $Z_5$ |
| $X_6$ | $Z_6$ |
| $X_7$ | $Z_7$ |
| $X_8$ | $Z_8$ |

# Fig. 9

# Fig. 10

# Fig. 11